Europäisches Patentamt

European Patent Office

Office européen des brevets

(19)

(11) Numéro de publication: **0 058 186**
**B1**

(12) # FASCICULE DE BREVET EUROPEEN

(45) Date de publication du fascicule du brevet:
**19.02.86**

(51) Int. Cl.⁴: **G 03 B 27/54**

(21) Numéro de dépôt: **81902379.7**

(22) Date de dépôt: **24.08.81**

(86) Numéro de dépôt international:
**PCT/FR 81/00107**

(87) Numéro de publication internationale:
**WO 82/00721 (04.03.82 Gazette 82/7)**

(54) **AGRANDISSEUR PHOTOGRAPHIQUE A SOURCE LUMINEUSE PONCTUELLE.**

(30) Priorité: **25.08.80 FR 8018548**

(43) Date de publication de la demande:
**25.08.82 Bulletin 82/34**

(45) Mention de la délivrance du brevet:
**19.02.86 Bulletin 86/8**

(84) Etats contractants désignés:
**AT CH DE FR GB LI LU NL SE**

(56) Documents cités:
**GB - A - 830 954**
**GB - A - 1 142 524**
**US - A - 1 630 616**
**US - A - 2 843 010**

(73) Titulaire: **MERCIER, Philippe George, 19 Rue de la Fraternité, F-90000 Belfort (FR)**

(72) Inventeur: **MERCIER, Philippe George, 19 Rue de la Fraternité, F-90000 Belfort (FR)**

(74) Mandataire: **Nithardt, Roland, CABINET ROLAND NITHARDT 2, rue du 17 Novembre, F-68100 Mulhouse (FR)**

ACTORUM AG

## Description

La présente invention concerne un agrandisseur photographique permettant d'agrandir aux formats et aux densités souhaités un négatif ou une diapositive en réalisant une projection de ces derniers sur une feuille de papier photosensible, cet agrandisseur comportant une source de lumière ponctuelle, un objectif d'agrandissement, un système optique créant une image de la source lumineuse au centre optique de l'objectif d'agrandissement et un support porte-négatif mobile, la source de lumière ponctuelle se déplaçant axialement selon une loi linéaire en fonction du déplacement axial de l'objectif d'agrandissement.

Dans le laboratoire photographique, l'agrandisseur permet d'agrandir aux formats et aux densités souhaités, un négatif ou une diapositive en réalisant une projection de ces derniers sur une feuille de papier photosensible sachant que le système optique à condenseurs doit former une image de la lampe dans le centre optique de l'objectif d'agrandissement. Il est nécessaire également que le cône de lumière issu du système optique couvre entièrement le négatif. Il faut noter que le déplacement axial image-objet dans ce système optique simple répond à l'équation de la forme: $Y = 1/X$, ce qui représente une fonction hyperbolique. De ce fait le déplacement axial de l'objectif d'agrandissement engendre un déplacement correspondant de la source, les deux déplacements étant liés par la fonction ci-dessus. En pratique, cela signifie que l'ajustage ne peut pas être effectué mécaniquement de façon simple et nécessite une intervention manuelle compliquée.

Sur les agrandisseurs photographiques de ce type, l'image de la lampe par le système optique à condenseurs devant se faire dans le centre optique de l'objectif, le réglage de la lampe doit être effectué après chaque changement de position de l'objectif, c'est-à-dire après chaque mise au point, réglage qui s'avère fastidieux, long et source d'erreurs.

D'autre part, l'image de la source lumineuse ponctuelle dans l'objectif étant également ponctuelle, toute l'énergie lumineuse passe par le centre des lentilles et du diaphragme de l'objectif. On voit donc que le diaphragme perd sa fonction, devenant inutile à l'atténuation de l'éclairement, c'est ainsi que dans le cas des petits rapports d'agrandissements où l'on a un fort éclairement non atténuable, on est obligé de réduire considérablement les temps d'exposition pour obtenir la lumination adaptée à la surface sensible à exposer puisque $H = E \cdot t$ (où H est la lumination, E l'éclairement et t le temps d'exposition), mais cette relation n'étant vraie que dans un domaine très restreint (loi de Schwartzchild) il en résulte une mauvaise qualité de l'image finale. Le cône de lumière issu des condenseurs devant couvrir entièrement le négatif en ayant une marge de sécurité minimum de façon à éclairer celui-ci au maximum, impose le réglage ou le changement du système optique à condenseurs pour s'adapter au format du négatif. Ce système est source d'erreurs, il est très onéreux dans le cas du changement de condenseurs, il est fastidieux d'emploi et cause donc une perte de temps considérable.

Tous ces inconvénients font que ce type d'agrandisseur n'est plus utilisé, sauf dans des cas bien particuliers où le contraste et la définition donnés sont impératifs (dans les arts graphiques par exemple).

C'est pour cette raison que l'on utilise plus couramment des agrandisseurs modulaires. Ils disposent d'un châssis sur lequel on peut adapter un système de lumière ponctuelle, semi-diffuse ou diffuse, ou encore couleur (exclusivement diffuse) par un ensemble de boîtes interchangeables. Souvent, il est nécessaire de disposer de systèmes optiques relatifs à chaque boîte et correspondant à chaque format de négatif rencontré. Il en résulte que ces appareils sont onéreux et leur emploi fastidieux. Il faut en outre noter que la source lumineuse ponctuelle est très facilement diffusable (pour répondre à des besoins artistiques, dans le tirage de portraits par exemple) alors que la réciproque est impossible. Il est en effet impossible de transformer une source diffuse en source ponctuelle.

Un principe voisin de celui de l'agrandisseur selon l'invention, est utilisé dans le projecteur décrit par le US-A-2 843 010. Ce projecteur à source lumineuse ponctuelle, a un groupe optique unique, dans lequel la source est reliée à l'objectif par un système à déplacement linéaire. La loi du déplacement de la source et de l'objectif n'est pas linéaire, puisque ce déplacement répond à une fonction hyperbolique. Dans une certaine plage de fonctionnement l'approximation peut être considérée comme satisfaisante. Cette approximation peut être considérée comme acceptable pour les objectifs de grande dimension, pour un déplacement relativement limité.

La présente invention a pour but de remédier aux inconvénients susmentionnés des agrandisseurs à source lumineuse ponctuelle. Dans ce but, l'agrandisseur selon l'invention est caractérisé en ce que le système optique est constitué de deux systèmes optiques fixes A et B, tels que le foyer image du système A est confondu avec le foyer objet du système B.

Selon une forme de réalisation préférée, les deux systèmes optiques ont des focales identiques. Dans ce cas, un même chariot mobile peut porter l'objectif d'agrandissement et la source de lumière de sorte que le déplacement axial relatif de l'objectif et de la source est nul. Ce réglage peut par conséquent s'effectuer mécaniquement ce qui n'est pas le cas lorsque la loi des déplacements relatifs est hyperbolique, comme cela était le cas dans les agrandisseurs à source ponctuelle de l'art antérieur.

En outre, l'agrandisseur comporte de préférence un support porte-négatif à différents niveaux, ce qui supprime les changements ou les réglages du système optique à condenseurs.

Les avantages obtenus grâce à ce système sont d'une part l'élimination de réglages fastidieux, d'autre part la diminution du coût de l'agrandisseur car premièrement, la lumière étant ponctuelle, il est toujours possible de la diffuser sans pour autant avoir besoin d'autres boîtes à lumière et deuxièmement par son porte-négatif à rayon qui n'impose pas plusieurs systèmes optiques adaptés aux formats rencontrés. Il a également l'avantage d'être plus lumineux lors des grands rapports d'agrandissement. En somme cet agrandisseur reprend le principe de l'agrandisseur à lumière ponctuelle en gardant toutes ses qualités, le système optique éliminant tous ses défauts. L'ensemble système optique et porte-négatif en fait un appareil très souple d'emploi et s'adaptant toujours aux besoins artistiques de l'opérateur tout en restant très rapide, agréable et simple à utiliser.

La présente invention sera mieux comprise en référence à la description d'un exemple de réalisation et du dessin annexé dans lequel:

la figure 1 représente schématiquement le système optique de l'agrandisseur selon l'invention,

les figures 2 à 4 représentent les fonctions du déplacement objet pA en ordonnée par rapport au déplacement image pB en abscisse, la fig. 2 dans la technique antérieure, la fig. 3 pour le système optique selon l'invention lorsque fA = fB, la fig. 4 lorsque fA ≠ fB,

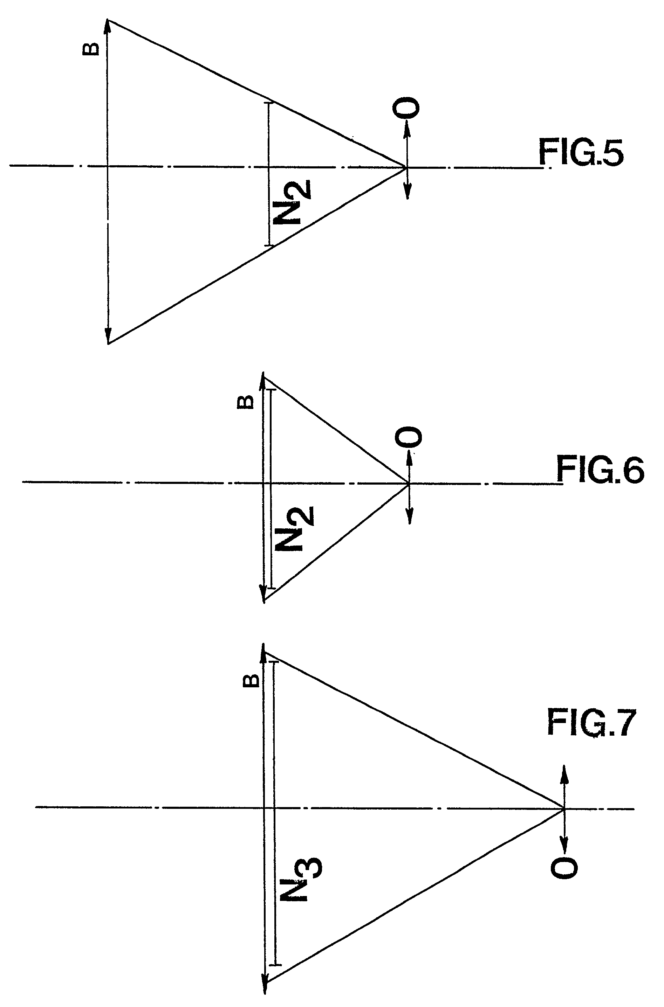

les figures 5 à 7 illustrent la technique antérieure lors du changement d'un négatif N3 par un négatif N2 de format inférieur, où l'on change le système optique (fig. 7, fig. 6) et où l'on change la position du système optique (fig. 7, fig. 5) pour l'adapter au format du négatif N2.

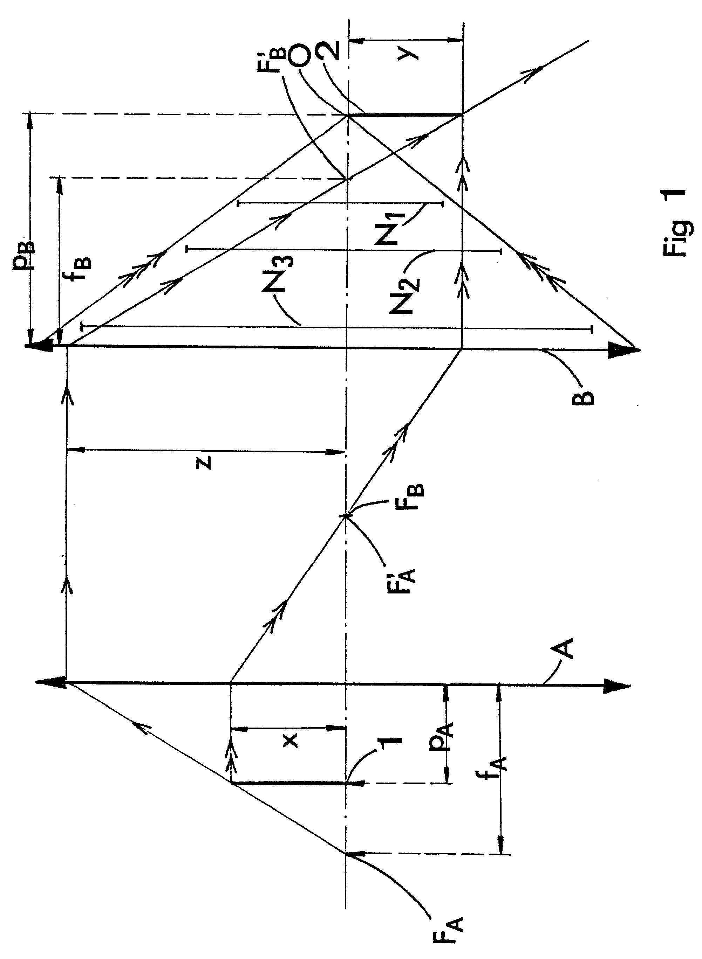

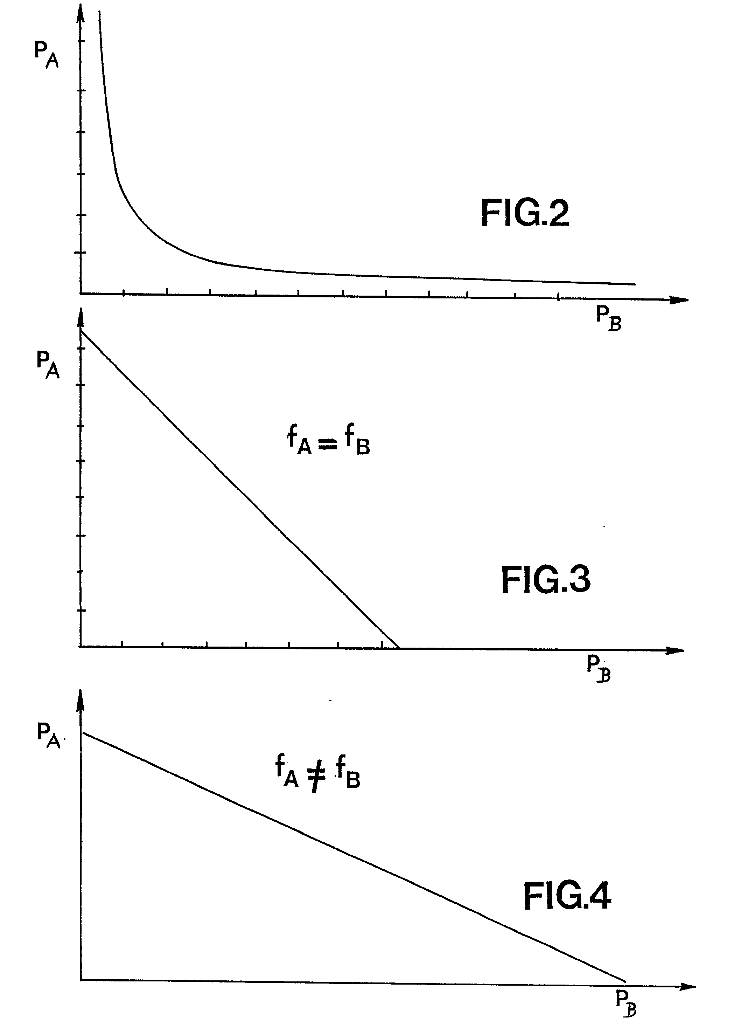

En se référant à la fig. 1, on voit le schéma optique de l'agrandisseur selon l'invention comportant une lampe 1 qui constitue la source lumineuse ponctuelle se déplaçant entre A et $F_A$ suivant l'axe optique représenté par un trait mixte, deux groupes optiques fixes A et B, chacun étant composé d'une lentille ou d'un groupe de lentilles (le groupe A peut être aussi constitué par un miroir sphérique), ces groupes optiques de focale fA et fB ont leur foyer $F'_A$ (image de A,) et $F_B$ (objet de B) confondus et leur fonction de déplacement est représentée par les figures 3 et 4. Le cône de lumière issu du dernier groupe optique B rencontre une série de segments N1, N2 et N3 représentant des négatifs de formats différents utilisés dans cet agrandisseur et dont la position est fonction de la taille. L'image 2 de la source lumineuse 1 par le système optique AB doit se former, comme le montre le tracé, au centre optique de l'objectif d'agrandissement O se translatant le long de l'axe optique par le système de mise au point.

La fig. 1 représente le système optique d'un agrandisseur réglé de telle manière que l'image 2 de la lampe 1 formée par le système optique se fasse dans le centre optique de l'objectif placé en O et ceci quelle que soit la position de l'objectif sans avoir à faire de réglage manuellement. La démarche mathématique nous donne le rapport taille objet/taille image c'est-à-dire sur la figure 1:

$$\frac{x}{y} = \frac{fA}{fB}$$

où x est la taille de l'objet et y la taille de l'image.

La taille de l'objet donne donc une image de taille proportionnelle au rapport des focales et est donc constante. Il est ainsi possible d'utiliser une source lumineuse dont la taille sera correctement calculée de façon que son image dans le centre optique corresponde à la taille du diaphragme ouvert. L'utilité du diaphragme est ainsi conservée sans pour autant perdre la relative ponctualité de la source lumineuse.

Sachant que:

$$\frac{x}{z} = \frac{fA - pA}{fA} , \frac{y}{z} = \frac{pB - fB}{fB} , \frac{x}{y} = \frac{fA}{fB} \text{ l'on a}$$

$$pB = \left(\frac{fB}{fA}\right)^2 .pA + fA.fB(fA - fB)$$

où pB représente le déplacement image, où pA représente le déplacement objet, et où z représente la distance d'un rayon lumineux issu de l'objet à l'axe optique. Cette équation est de la forme Y = AX + B qui est l'équation d'une droite. De plus lorsque fA = fB l'équation se résout à pB = pA. Le déplacement relatif entre la lampe 1 et son image 2 (c'est-à-dire l'objectif) est donc ou proportionnel ou nul. Il est donc facile d'automatiser le déplacement en déplaçant un chariot supportant la lampe soit directement par le chariot supportant l'objectif (système de mise au point) lorsque le déplacement est nul, soit, lorsque le déplacement est proportionnel, au moyen de deux câbles s'enroulant sur deux tambours d'un même treuil dont le rapport des diamètres correspond au

rapport $\left(\frac{fB}{fA}\right)^2.$

Sur la figure 1 on voit également les différents emplacements des négatifs indiqués par les segments N1, N2, N3. Ces négatifs sont placés de telle sorte qu'ils soient entièrement couverts par le cône de lumière issu du groupe optique B. Un passe-vue permettant de maintenir le négatif correspondant peut être placé à des niveaux différents à l'aide de glissières ou à l'aide d'un système de réglage. Ce système a pour effet d'éviter tout changement ou réglage du système optique de l'agrandisseur. Le reste de l'agrandisseur étant construit de façon identique à la technique antérieure, une description plus détaillée en est inutile.

Il en ressort donc que l'agrandisseur suivant l'invention est un agrandisseur à source lumineuse ponctuelle ne nécessitant aucun réglage de la lampe lors des changements de mise au point, ne nécessitant aucun réglage ni changement d'optique lors des changements de format de négatif et dont l'utilité du diaphragme est conservée.

## Revendications

1. Agrandisseur photographique permettant d'agrandir aux formats et aux densités souhaités un négatif ou une diapositive en réalisant une projection de ce dernier sur une feuille de papier photosensible, cet agrandisseur comportant une source de lumière ponctuelle, un objectif d'agrandissement, un système optique créant une image de la source lumineuse au centre optique de l'objectif d'agrandissement et un support porte-négatif mobile, la source de lumière ponctuelle se déplaçant axialement selon une loi linéaire en fonction du déplacement axial de l'objectif d'agrandissement, caractérisé en ce que le système optique est constitué de deux systèmes optiques fixes A et B tels que le foyer image du système A est confondu avec le foyer objet du système B.

2. Agrandisseur selon la revendication 1, caractérisé en ce que les deux systèmes optiques ont des focales identiques.

3. Agrandisseur selon la revendication 1, caractérisé en ce que les deux systèmes optiques A et B ont des focales fA et fB différentes.

4. Agrandisseur selon la revendication 2, caractérisé en ce que l'objectif d'agrandissement et la source de lumière ponctuelle sont montés sur un même chariot mobile de sorte que le déplacement relatif entre cet objectif et cette source est nul.

5. Agrandisseur selon la revendication 3, caractérisé en ce que l'objectif d'agrandissement et la source de lumière ponctuelle sont montés sur deux chariots mobiles simultanément, ces chariots étant agencés de manière à se déplacer de telle façon que le rapport de leurs déplacements soit proportionnel à $(fB/fA)^2$.

6. Agrandisseur selon la revendication 1, caractérisé en ce que le support porte-négatif comporte des niveaux différents correspondant à divers formats du négatif.

## Claims

1. Photographic enlarger enabling the enlargement of a negative or transparency to desired formats and densities by creating a projection of the former on a sheet of photosensitive paper, this enlarger having a pinpoint light source, an enlarging lense, an optical system creating an image of the light source at the optical centre of the enlarging lens and a mobile negative holder support, the pinpoint light source being displaced axially in accordance with a linear law as a function of the axial displacement of the enlarging lens, characterised in that the optical system is formed of two fixed optical systems A and B so that the focal image of system A is merged with the focal object of system B.

2. Enlarger according to Claim 1, characterised in that the two optical systems have identical focal distances.

3. Enlarger according to Claim 1, characterised in that the two optical systems A and B have different focal distances fA and fB.

4. Enlarger according to Claim 2, characterised in that the enlarging lens and the pinpoint light source are mounted on a single mobile trolley so that the relative displacement between this lens and this source is zero.

5. Enlarger according to Claim 3, characterised in that the enlarging lens and the pinpoint light source are mounted on two mobile trolleys simultaneously, these trolleys being arranged so that they move so that the ratio of their movements are proportional to $(fB/fA)^2$.

6. Enlarger according to Claim 1, characterised in that the negative holder support has different levels corresponding to different formats of the negative.

## Patentansprüche

1. Photographischer Vergrösserungsapparat zum Vergrössern eines Negativs oder eines Diapositivs auf gewünschte Formate und Schwärzungen durch Projektion des Negativs oder des Diapositivs auf ein Blatt Photopapier, wobei der Vergrösserungsapparat aus einer punktförmigen Lichtquelle, einem Vergrösserungsobjektiv, und einem optischen System besteht, das ein Bild der Lichtquelle in der optischen Achse des Vergrösserungsobjektivs erzeugt, des weiteren aus einem beweglichen Negativträger, wobei sich die punktförmige Lichtquelle axial in linearer Abhängigkeit von der axialen Bewegung des Vergrösserungsobjektivs verschieben lässt, dadurch gekennzeichnet, dass das optische System aus zwei festen optischen Systemen A und B besteht, so dass der Bildbrennpunkt des Systems A mit dem Objektbrennpunkt des Systems B zusammenfällt.

2. Vergrösserungsapparat nach Anspruch 1, dadurch gekennzeichnet, dass die zwei optischen Systeme identische Brennpunkte haben.

3. Vergrösserungsapparat nach Anspruch 1, dadurch gekennzeichnet, dass die zwei optischen Systeme A und B zwei verschiedene Brennpunkte fA und fB haben.

4. Vergrösserungsapparat nach Anspruch 2, dadurch gekennzeichnet, dass das Vergrösserungsobjektiv und die punktförmige Lichtquelle auf dem gleichen beweglichen Schlitten befestigt sind, so dass die relative Bewegung zwischen diesem Objektiv und dieser Lichtquelle gleich null ist.

5. Vergrösserungsapparat nach Anspruch 3, dadurch gekennzeichnet, dass das Vergrösserungsobjektiv und die punktförmige Lichtquelle auf zwei gleichzeitig beweglichen Schlitten montiert sind, wobei die Schlitten derart angeordnet sind, dass sie sich so bewegen lassen, dass das Verhältnis ihrer Bewegungen proportional zu $(fB/fA)^2$ ist.

6. Vergrösserungsapparat nach Anspruch 1, dadurch gekennzeichnet, dass der Negativträger verschiedene Höhenstellungen, entsprechend den verschiedenen Negativformaten, aufweist.

Fig 1

FIG.2

$f_A = f_B$

FIG.3

$f_A \neq f_B$

FIG.4

FIG.5

FIG.6

FIG.7